# EUROPÄISCHE PATENTSCHRIFT

(11) **EP 2 262 630 B1**
(45) Veröffentlichungstag und Bekanntmachung des Hinweises auf die Patenterteilung: **26.10.2011**
(21) Anmeldenummer: 09731676.4
(22) Anmeldetag: 16.02.2009
(51) Int. Cl.: B29B 11/16, B29C 70/38, B29C 70/32

(54) **VERFAHREN ZUR HERSTELLUNG VON FASERVORFORMLINGEN**
PROCESS FOR PRODUCING FIBRE PREFORMS
PROCÉDÉ DE FABRICATION D'ÉBAUCHES EN FIBRES

(30) Priorität: 16.04.2008 US 124313 P; 16.04.2008 DE 102008019147
(43) Veröffentlichungstag der Anmeldung: 22.12.2010
(73) Patentinhaber: Airbus Operations GmbH, 21129 Hamburg (DE)
(72) Erfinder: PIEPENBROCK, Joachim, 21614 Buxtehude (DE); BARLAG, Carsten, 26441 Jever (DE); ZAHLEN, Pierre, 21680 Stade (DE)
(74) Vertreter: Peckmann, Ralf
(86) Internationale Anmeldenummer: PCT/EP2009/051802
(87) Internationale Veröffentlichungsnummer: WO 2009/127456

(56) Entgegenhaltungen:
- US-A- 5 394 906
- US-A- 5 562 788
- US-A1- 2007 023 139
- RUDD C D ET AL: "Tow placement studies for liquid composite moulding" COMPOSITES PART A: APPLIED SCIENCE AND MANUFACTURING, ELSEVIER SCIENCE PUBLISHERS B.V., AMSTERDAM, NL, Bd. 30, Nr. 9, 1. September 1999 (1999-09-01), Seiten 1105-1121, XP004171655 ISSN: 1359-835X

## Beschreibung

Die vorliegende Erfindung betrifft ein Verfahren zur Herstellung von Faservorformlingen.

Im Leichtbau, insbesondere im Flugzeugbau, finden zunehmend Verbundbauteile aus faserverstärkten Kunststoffen Verwendung, die mechanisch extrem belastbar sind und gleichzeitig ein hohes Gewichtseinsparpotential bieten. Diese Bauteile werden mit Verstärkungsfasern gebildet, die anschließend zur Bildung des fertigen Bauteils mit einem aushärtbaren Kunststoffmaterial, beispielsweise einem Polyesterharz, einem Epoxydharz oder dergleichen durchtränkt bzw. imprägniert werden. Dabei werden die Fasern in der Matrix bei deren Verfestigung zur Herstellung des Faserverbundes verankert.

Die Ausrichtung der Verstärkungsfasern in einem derartigen Bauteil hat maßgeblichen Einfluss auf dessen Steifigkeit und Festigkeit. Die Verstärkungsfasern sollen, um optimale mechanische Eigenschaften zu erreichen, wenn möglich der Belastungsrichtung folgen und keine Welligkeit aufweisen. Darüber hinaus ist eine gleichmäßige Beanspruchung jeder einzelnen Verstärkungsfaser anzustreben.

Es werden auch Faservorformlinge (Preforms), die durch Ablegen von vorgefertigten aus Faserbündeln oder trockenen Faserrovings bestehenden Faserhalbzeugen wie Multiaxialgelege-, Vlies- oder Gewebeteppich hergestellt werden, verwendet. Die Geometrien werden dazu z.B. aus einer Rollenware ausgeschnitten. Mit diesen konventionellen Halbzeugen sind nicht alle denkbaren Faserorientierungen realisierbar, da die Verstärkungsfasern dort im Allgemeinen in einer bestimmten, festgelegten Orientierung angeordnet sind. Fasergelege lassen sich zwar "drapieren", das heißt in der Ebene ohne Faltenwurf beispielsweise zu Kreisringsegmenten ablegen, doch lassen sich die Verstärkungsfasern im Allgemeinen nicht dem Verlauf komplexerer Kraftflusslinien angleichen.

Eine Möglichkeit der Forderung nach einer belastungsgerechten Faserausrichtung nachzukommen ist das bekannte TFP-Verfahren. Hierbei werden trockene Faserrovings zur mechanischen Verstärkung ("Rovings."), die wiederum mit einer Vielzahl von parallel zueinander verlaufenden diskreten Verstärkungsfasern gebildet sind, entlang einer beliebigen Bahnkurve abgelegt und mit Hilfe eines Fixierfadens auf einer Tragschicht zur Bildung eines Faservorformlings ("Preform") angeheftet, wodurch die Ausrichtung der einzelnen trockenen Faserrovings nahezu optimal den auf das fertige Verbundbauteil einwirkenden Kräften anpassbar ist. Die Fixierung erfolgt hierbei durch einen Fixieroberfaden und einen Fixierunterfaden, die miteinander unterhalb der Tragschicht - in Entsprechung zu konventionellen Nähverfahren - miteinander verkettet werden. Durch die so erzielte optimale Ausnutzung der mechanischen Belastbarkeit der trockenen Faserrovings kann deren Anzahl und somit auch das Gewicht minimiert werden. Zudem kann der Bauteilquerschnitt den jeweiligen lokalen Belastungen in idealer Weise angepasst werden. Weiterhin lässt die gezielte Verstärkung in besonders beanspruchten Zonen, wie z.B. Krafteinlenkungsbereichen oder dergleichen, durch die Ablage von zusätzlichen trockenen Faserrovings bilden. Die Verstärkungsfasern sind beispielsweise mit Glasfasern, Kohlefasern, Aramidfasern, Polyersterfasern oder dergleichen gebildet.

Die Fertigung von Faservorformlingen mittels des TFP-Verfahrens kann auf üblichen CNC-gesteuerten Näh- bzw. Stickautomaten, die beispielsweise auch in der Textilindustrie Verwendung finden, erfolgen.

Sind alle erforderlichen Lagen mit trockenen Faserrovings abgelegt, so wird der fertige Faservorformling, der in der Regel schon die gewünschte Endkontur aufweist, in eine verschließbare Form eingelegt, mit einem aushärtbaren Kunststoffmaterial imprägniert und abschließend zum fertigen Verbundbauteil ausgehärtet. Hierbei können mehrere TFP-Faservorformlinge und/oder Lagen aus Verstärkungsgeweben kombiniert werden. Mehrschichtige Faservorformlinge können durch das Übereinanderschichten von mehreren Faservorformlingen gebildet werden, so dass höhere Materialstärken realisierbar sind.

Die Imprägnierung der Faservorformlinge mit aushärtbaren Kunststoffmaterial kann beispielsweise mittels des bekannten RTM-Verfahrens ("Resin Transfer Moulding") in einer entsprechend gestalteten verschließbaren Form erfolgen.

In der DE 10 2005 034 401 B4 wird ein solches Verfahren zur Herstellung von ein- oder mehrschichtigen Faservorformlingen im TFP-Verfahren beschrieben. Es werden hier Fixierfäden zur Befestigung des Geleges verwendet.

Das TFP-Verfahren hat den Nachteil, dass große Materialstärken der Faservorformlinge schlecht realisierbar sind, da das Vernähen mit Fixierfäden mit zunehmender Materialstärke schwierig wird. Ferner stellen die Fixiernähte Störstellen im Faserverbund dar und reduzieren daher die Festigkeit.

Die anderen bisherigen Verfahren weisen entweder einen hohen Verschnittanteil der Rollenware auf, eine gekrümmte unidirektionale Ablage der Faserhalbzeuge ist nicht möglich oder es kann nur immer ein einzelner trockener Faserroving und nicht mehrere gleichzeitig abgelegt werden. Ferner müssen bisher einzelne trockene Faserrovings an den Enden fixiert werden.

Es ist daher Aufgabe der vorliegenden Erfindung ein Verfahren bereitzustellen, das es ermöglicht, mehrere trockene Faserrovings gleichzeitig nebeneinander abzulegen. Ferner soll es möglich sein, gekrümmte Bahnen mit den trockenen Faserrovings zu bilden. Es ist eine weitere Aufgabe der vorliegenden Erfindung, eine voneinander unabhängige gleichzeitige Zuführung mehrerer trockener Faserrovings zu ermöglichen, um die Zeit für das Herstellen des Faservorformlings zu reduzieren. Ferner soll der Faservorformling als Fasergelege stabil sein und es dadurch ermöglicht werden, den Faservorformling ohne ein Fixieren der trockenen Faserrovings mit Fixierfäden oder das Anheften der trockenen Faserrovings mit Klebestreifen oder Klebstoffbereichen zu bilden. Im US-A-2007/0023139 werden die Merkmale des oberbegriffs des Anspruchs, offenbart. Die erfindungsgemäße Aufgabe wird durch ein Verfahren mit den Merkmalen des Anspruchs 1 gelöst.

Die der vorliegenden Erfindung zugrunde liegende Idee besteht darin, dass bei einem Verfahren zum Herstellen von Faservorformlingen in einem ersten Verfahrensschritt voneinander unabhängig gleichzeitig mehrere trockene Faserrovings zu einer Form zugeführt werden, wobei wenigstens einzelne trockene Faserrovings mit unterschiedlicher Geschwindigkeit zugeführt werden. Die trockenen Faserrovings werden dann gleichzeitig nebeneinander direkt auf der Form oder auf sich auf der Form befindende trockene Faserrovings abgelegt. Schließlich werden die trockenen Faserrovings durchtrennt.

Dadurch, dass beim erfindungsgemäßen Verfahren direkt die trockenen Faserrovings aufgetragen werden und keine breiteren Gewebestreifen verwendet werden, kann eine bessere Anpassung an die gewünschte Kontur erfolgen. Jeder einzelne trockene Faserroving kann hierbei mit einem eigenen Radius entlang einer geometrischen Kontur verlaufen. Hierzu ist es vorteilhaft, dass die trockenen Faserrovings unabhängig voneinander, bevorzugt auch mit unterschiedlicher Geschwindigkeit zugeführt werden, da so ein Verlauf der Fasern entlang unterschiedlicher Radien ermöglicht wird.

In den Unteransprüchen finden sich vorteilhafte Ausgestaltungen und Verbesserungen der Erfindung.

So werden bei einer vorteilhaften Ausführungsform der Erfindung trockene Faserrovings auf der Basis von Carbon-, Aramid- , Polyester-, oder Glasfasern zugeführt.

Die vorgenannten Materialien weisen besonders günstige Festigkeitseigenschaften auf. Insbesondere auf Basis von Carbon- und Aramidfasern lassen sich mit dem erfindungsgemäßen Verfahren Bauteile mit einem sehr günstigen Verhältnis von Festigkeit und Steifigkeit zum Bauteilgewicht herstellen.

Bei einer weiteren vorteilhaften Ausführungsform werden übereinander verlaufende trockene Faserrovings im Wesentlichen unter einem Winkel von wenigstens 25 Grad zueinander abgelegt.

Der Vorteil von dem Ablegen der trockenen Faserrovings unter einem Winkel zueinander liegt im Vergleich zu einer reinen unidirektionalen Ablage darin, dass Bauteile herstellbar sind, die flexibler an die Belastungsrichtungen angepasst sind.

Bei einer weiteren bevorzugten Ausführungsform werden die trockenen Faserrovings übereinander unter zwei oder mehr verschiedenen Winkeln zueinander in Form von einem Multiaxialgelege abgelegt.

Durch diese Ausführungsform können Faserverbundwerkstoffe hergestellt werden, die aus entsprechenden Richtungen eingeleitete Kräfte gut aufnehmen können und sehr gute Festigkeits-Kostenverhältnisse aufweisen. Die optimale Auslegung hinsichtlich der Faserwinkel in den verschiedenen Belastungsrichtungen der Bauteile ermöglicht geringe spezifische Gewichte. Der Lagenaufbau der Multiaxialgelege wird bevorzugt biaxial, triaxial oder quatroaxial sein.

Bei einer weiteren bevorzugten Ausführungsform werden die trockenen Faserrovings in einem Verfahrensschritt vor dem Ablegen mit einem Bindemittel insbesondere einem thermoplastischen Bindemittel versehen.

Das Bindemittel dient zum Verbinden der trockenen Faserrovings, um einen stabilen Faservorformling herzustellen. Es handelt sich bei dem Bindemittel bevorzugt um einen pulverförmigen Schmelzbinder, der als Staub auf die trockenen Faserrovings aufgebracht wird. Bevorzugt werden dazu trockene Faserrovings und besonders bevorzugt der Bindemittelstaub elektrostatisch aufgeladen, um ein gutes Anhaften des Bindemittelstaubs an den trockenen Faserrovings zu ermöglichen. Es kann bevorzugt auch flüssiges Bindemittel auf die trockenen Faserrovings aufgesprüht, aufgerollt oder aufgestrichen werden oder die trockenen Faserrovings darin eingetaucht werden. Ferner können auch einzelne Filamente in die tröckenen Faserrovings eingearbeitet sein, die Bindemittel enthalten.

Bei einer weiteren bevorzugten Ausführungsform werden im Verfahrensschritt von dem Durchtrennen der trockenen Faserrovings zumindest einzelne trockene Faserrovings voneinander unabhängig mittels mindestens einer Trenneinheit durchtrennt.

Auf diese Weise kann die Länge der einzelnen trockenen Faserrovings individuell eingestellt werden, um einen angepassten Faserverbund herzustellen.

Gemäß der Erfindung erfolgt beim Ablegen der trockenen Faserrovings ein Fixieren der trockenen Faserrovings durch Aktivierung des Bindemittels. Hierfür können unterschiedliche Verfahren vorteilhaft eingesetzt werden, z.B. Andruck und/oder Wärmebestrahlung und/oder Mikrowellenbestrahlung und/oder Infrarotlichtbestrahlung und/oder UV-Licht-Bestrahlung und/oder Laserbestrahlung und/oder induktive Energieeinbringung und/oder Kontakterwärmung.

Gemäß einer weiteren bevorzugten Ausführungsform erfolgt nach dem Ablegen der trockenen Faserrovings.oder nach dem Durchtrennen der trockenen Faserrovings ein Verfahrensschritt von einem Imprägnieren oder Infiltrieren der abgelegten trockenen Faserrovings mit einem aushärtbaren Kunststoffmaterial.

Durch diesen Verfahrensschritt werden die Fasern in der Matrix bei deren Verfestigung zur Herstellung des Faserverbundes verankert. Das Infiltrieren durch das Kunststoffmaterial kann durch ein Vakuum unterstützt werden, so dass das flüssige Kunststoffmaterial mittels des atmosphärischen Drucks in das Fasermaterial gedrückt wird.

Die Erfindung wird im Folgenden anhand eines Ausführungsbeispiels unter Bezugnahme auf die beiliegende Figur der Zeichnung näher erläutert.

Die Figur zeigt eine schematische Darstellung eines prinzipiellen Aufbaus einer Vorrichtung zur Ausführung des erfindungsgemäßen Verfahrens zur Herstellung von Faservorformlingen links als seitlichen Querschnitt und rechts als Vorderansicht.

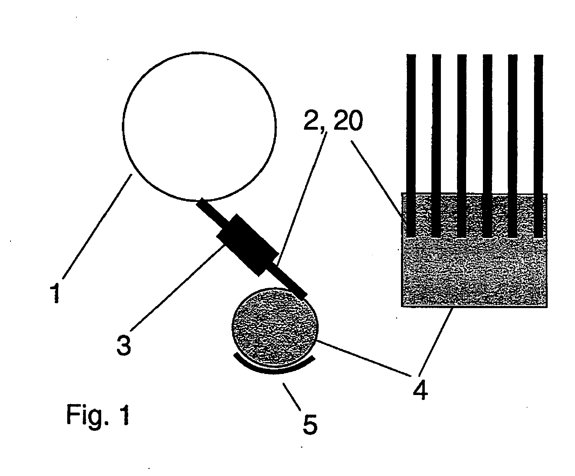

Die Fig. 1 ist eine schematische Darstellung eines prinzipiellen Aufbaus einer Vorrichtung zur Ausführung des erfindungsgemäßen Verfahrens zur Herstellung von Faservorformlingen links als seitlicher Querschnitt und rechts als Vorderansicht. Auf den Faserrovingspulen 1 befinden sich gemäß einer bevorzugten Ausführungsform der Erfindung trockene Faserrovings 2. Die trockenen Faserrovings 2 sind mit Bindemittel 20 versehen. Eine oder mehrere Trenneinheiten 3 sind den Faserrovingspulen 1 nachgeordnet angeordnet und dienen zum Durchtrennen der trockenen Faserrovings 2. Eine oder mehrere Druckrollen 4 sind der Trenneinheit 3 nachgeschaltet angeordnet und dienen zum Andrücken der trockenen Faserrovings 2 beim Ablegen auf der Form 5.

Die trockenen Faserrovings 2 werden unabhängig voneinander von den Faserrovingspulen 1 abgewickelt und auf der Form 5 oder bereits vorher abgelegten trockenen Faserrovings 2 augelegt. Mittels der Druckrolle 4 werden die trockenen Faserrovings 2 zusammengepresst und erwärmt, so dass sie aneinander haften. In der rechts angeordneten Vorderansicht ist zu erkennen, dass mehrere trockene Faserrovings 2 gleichzeitig zu der Form 5 und der Druckrolle 4 zugeführt werden. Die einzelnen trockenen Faserrovings 2 können dann von Trenneinheiten 3 durchtrennt werden. Danach können erneut trockene Faserrovings 2 abgelegt werden, so dass schichtweise ein Faservorformling entsteht.

Die trockenen Faserrovings 2 werden dabei einzeln unabhängig voneinander zugeführt, so dass sie sich zum Einen flexibel an die Kontur der Form 5 anlegen können und zum Anderen auch ihre Länge einzeln einstellbar ist. Besonders unebene bzw. gewölbte Formen lassen sich so ohne Auswölbungen bedecken. Dadurch, dass mehrere trockene Faserrovings 2 gleichzeitig zugeführt werden, können auch breite Flächen effizient mit trockenen Faserrovings 2 belegt werden. Ferner sind durch das schichtweise Auftragen auch große Materialstärken mittels mehrerer Schichten realisierbar.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Das Verfahren zur Herstellung von Faservorformlingen für Verbundwerkstoffbauteile gemäß der vorliegenden Erfindung ermöglicht, dass durch ein voneinander unabhängiges Aufbringen mehrerer trockener Faserrovings auch in räumlich unebenen Konturen direkt komplexe Geometrien flexibel und kostengünstig hergestellt werden können. Der Einsatz von geschnittenen Gewebestreifen ist nicht mehr erforderlich, da gleich aus den trockenen Faserrovings Faservorformlinge hergestellt werden. Dadurch entfallen Produktions-, Transport- und Kommissioniervorgänge. Ein Zuschnitt von Faserstreifen entfällt, wodurch Material eingespart werden kann. Ferner können die mechanischen Kennwerte im Verbundwerkstoff erhöht werden, weil keine Vernähung von Faserbahnen erforderlich ist. Das beschriebene Verfahren ist außerdem gut skalierbar, da durch die Anzahl der nebeneinander angeordneten trockenen Faserrovings die belegbare Fläche variiert werden kann. Ferner ist es vorteilhaft, dass die trockenen Faserrovings direkt im Prozess fixiert werden.

### Bezugszeichenliste

- 1: Faserrovingspulen
- 2: Trockene Faserrovings
- 3: Trenneinheiten
- 4: Druckrollen
- 5: Form
- 20: Bindemittel

## Patentansprüche

1. Verfahren zum Herstellen eines Faservorformlings, umfassend die Schritte.:
a) voneinander unabhängiges Zuführen mehrerer mit einem Bindemittel versehener, trockener Faserrovings zu einer konturierten Form (5);
b) gleichzeitiges Ablegen und Fixieren durch Aktivierung des Bindemittels der mehreren trockenen Faserrovings (2) nebeneinander direkt auf der Form (5) oder auf sich auf der konturierten Form (5) befindende trockene Faserrovings (2) zum Bilden des Faservorformlings; und
c) Durchtrennen der trockenen Faserrovings (2); **dadurch gekennzeichnet, dass** im Schritt a) wenigstens einzelne trockene Faserrovings (2) mit unterschiedlicher Geschwindigkeit zugeführt werden.

2. Verfahren nach Anspruch 1,
**dadurch gekennzeichnet,**
**dass** im Verfahrensschritt des Zuführens der trockenen Faserrovings (2) trockene Faserrovings (2) auf der Basis von Carbon-, Aramid-, Polyester-, oder Glasfasern zugeführt werde.

3. Verfahren nach Anspruch 1 oder 2,
**dadurch gekennzeichnet,**
**dass** übereinander verlaufende trockene Faserrovings (2) im Wesentlichen unter einem Winkel von wenigstens 25 Grad zueinander abgelegt werden.

4. Verfahren nach wenigstens einem der vorhergehenden Ansprüche,
**dadurch gekennzeichnet,**
**dass** die trockenen Faserrovings (2) übereinander unter zwei oder mehr verschienen Winkeln zueinander in Form von einem Multiaxialgelege abgelegt werden.

5. Verfahren nach wenigstens einem der vorhergehenden Ansprüche,
**dadurch gekennzeichnet,**
**dass** die trockenen Faserrovings (2) in einem Verfahrensschritt vor dem Ablegen mit einem Bindemittel (20) insbesondere einem thermoplastischen Bindemittel (20) versehen werden.

6. Verfahren nach wenigstens einem der vorhergehenden Ansprüche,
**dadurch gekennzeichnet,**
**dass** im Verfahrensschritt des Durchtrennens der trockenen Faserrovings (2) zumindest einzelne trockene Faserrovings (2) voneinander unabhängig mittels mindestens einer Trenneinheit (3) durchtrennt werden.

7. Verfahren nach wenigstens einem der vorhergehenden Ansprüche,
**dadurch gekennzeichnet,**
**dass** die Aktivierung des Bindemittels (20) durch Andruck und/oder Wärmebestrahlung und/oder Mikrowellenbestrahlung und/oder Infrarotlichtbestrahlung und/oder UV-Licht-Bestrahlung und/oder Laserbestrahlung und/oder induktiver Energieeinbringung und/oder Kontakterwärmung durchgeführt wird.

8. Verfahren nach wenigstens einem der vorhergehenden Ansprüche,
**dadurch gekennzeichnet,**
**dass** nach dem Ablegen der trockenen Faserrovings (2) oder nach dem Durchtrennen der trockenen Faserrovings (2) ein Verfahrensschritt eines Imprägnierens oder Infiltrierens der abgelegten trockenen Faserrovings (2) mit einem aushärtbaren Kunststoffmaterial durchgeführt wird.

## Claims

1. A method of producing a fibre preform, comprising the steps of:
a) mutually independently supplying a plurality of dry fibre rovings provided with a bonding agent to a contoured mould (5);
b) simultaneously laying and fixing, by activation of the bonding agent, the plurality of dry fibre rovings (2) next to one another directly on the mould (5) or onto dry fibre rovings (2) located on the contoured mould (5) to form the fibre preform; and
c) severing the dry fibre rovings (2);
**characterised in that** in step a) at least some dry fibre rovings (2) are supplied at different speeds.

2. A method according to claim 1, **characterised in that**, in the method step of supplying the dry fibre rovings (2), dry fibre rovings (2) based on carbon, aramid, polyester, or glass fibres are supplied.

3. A method according to claim or claim 2, **characterised in that** dry fibre rovings (2) extending over one another are laid substantially at an angle of at least 25 degrees to one another.

4. A method according to any one of the preceding claims, **characterised in that** the dry fibre rovings (2) are laid over one another at two or more different angles to one another in the form of a multiaxial fabric.

5. A method according to any one of the preceding claims, **characterised in that**, in a method step prior to laying, the dry fibre rovings (2) are provided with a bonding agent (20), in particular a thermoplastic bonding agent (20).

6. A method according to any one of the preceding claims, **characterised in that**, in the method step of severing the dry fibre rovings (2), at least some dry fibre rovings (2) are severed mutually independently by means of at least one severing unit (3).

7. A method according to any one of the preceding claims, **characterised in that** activation of the bonding agent (20) is performed by pressure and/or thermal irradiation and/or microwave irradiation and/or infrared irradiation and/or UV irradiation and/or laser irradiation and/or inductive energy input and/or contact heating.

8. A method according to any one of the preceding claims, **characterised in that**, after laying the dry fibre rovings (2) or after severing the dry fibre rovings (2), a method step of impregnating or infiltrating the laid dry fibre rovings (2) with a curable plastics material is performed.

## Revendications

1. Procédé pour fabriquer d'une ébauche en fibres, comprenant les étapes suivantes :
a) acheminer indépendamment les uns des autres à un moule à bords plusieurs rovings de fibres secs munis d'un liant;
b) déposer et fixer simultanément, par activation du liant, les multiples rovings de fibres (2) secs les uns à côté des autres directement sur le moule (5) ou sur des rovings de fibres (2) secs placés sur le moule (5) à bords, pour former l'ébauche en fibres; et
c) sectionner les rovings de fibres (2) secs ;
**caractérisé en ce que**, à l'étape a), au moins certains rovings de fibres (2) secs sont acheminés à une vitesse différente.

2. Procédé selon la revendication 1, **caractérisé en ce que** des rovings de fibres (2) secs à base de fibres de carbone, d'aramide, de polyester ou de verre sont acheminés à l'étape consistant à acheminer les rovings de fibres (2) secs.

3. Procédé selon la revendication ou 2, **caractérisé en ce que** des rovings de fibres (2) secs superposés sont déposés en faisant approximativement un angle d'au moins 25 degrés les uns par rapport aux autres.

4. Procédé selon au moins une des revendications précédentes, **caractérisé en ce que** les rovings de fibres (2) secs sont déposés les uns sur les autres en faisant les uns par rapport aux autres deux angles ou plus sous forme d'un non-tissé multiaxial.

5. Procédé selon au moins une des revendications précédentes, **caractérisé en ce que**, dans une étape antérieure au dépôt, les rovings de fibres (2) secs sont munis d'un liant (20), en particulier d'un liant (20) thermoplastique.

6. Procédé selon au moins une des revendications précédentes, **caractérisé en ce que**, à l'étape consistant à séparer les rovings de fibres (2) secs, au moins certains rovings de fibres (2) secs sont sectionnés indépendamment les uns des autres à l'aide d'au moins une unité de sectionnement (3).

7. Procédé selon au moins une des revendications précédentes, **caractérisé en ce que** l'activation du liant (20) est réalisée par pression et/ou par exposition à la chaleur et/ou par exposition aux micro-ondes et/ou par exposition à la lumière infrarouge et/ou par exposition à la lumière ultraviolette et/ou par irradiation laser et/ou par apport d'énergie inductive et/ou par chauffage par contact.

8. Procédé selon au moins une des revendications précédentes, **caractérisé en ce que**, après que les rovings de fibres (2) secs ont été déposés ou après que les rovings de fibres (2) secs ont été sectionnés, a lieu une étape de procédé consistant à imprégner ou à infiltrer d'une matière plastique durcissable les rovings de fibres (2) secs déposés.
